# EUROPÄISCHE PATENTANMELDUNG

(11) **EP 2 080 645 A1**
(43) Veröffentlichungstag der Anmeldung: **22.07.2009**
(21) Anmeldenummer: 09000181.9
(22) Anmeldetag: 09.01.2009
(51) Int. Cl.: B60D 1/30, B60D 1/58, A01B 59/04

(54) **Anhängevorrichtung**

(30) Priorität: 15.01.2008 DE 102008004317; 03.11.2008 DE 102008054333
(71) Anmelder: Amazonen-Werke H. Dreyer GmbH & Co. KG, 49205 Hasbergen (DE)
(72) Erfinder: Klaus, Daniel, 85757 Karlsfeld (DE); Giehoff, Stefan, 32694 Dörentrup (DE); Oberheide, Friedrich, 49143 Bissendorf (DE)

(57) **Zusammenfassung**

Anhängevorrichtung für ein einen Rahmen (10) aufweisendes gezogenes landwirtschaftliches Gerät zur Ankupplung an die Unterlenker (6) des Dreipunktkrafthebers eines Zugfahrzeuges über eine Quertraverse (7) mit einer Deichsel (3), die mittels jeweils eines eine aufrechte Gelenkachse (9) aufweisenden als Deichselgelenk (8) ausgebildeten Gelenkes (8) an dem Rahmen (10) des Gerätes verbunden ist, wobei die Quertraverse (7) an der der Deichsel (3) mittels eines eine in Fahrtrichtung verlaufende Gelenkachse (16) aufweisenden Gelenkes (5), das ein Verschwenken der Quertraverse (7) gegenüber der Deichsel (3) um diese Gelenkachse (16) ermöglicht, angeordnet ist. Um diese vorgeschilderte Kippgefahr mittels einfacher Mittel zu verringern, ist vorgesehen, dass zwischen der Quertraverse (7) und dem Rahmen (10) ein Torsionselement angeordnet ist, dass das Torsionselement (22) jeweils mit der Quertraverse und dem Rahmen (10) in drehfester Weise verbunden ist und zwar derart, dass die Quertraverse (7) gegen die Federkraft des Torsionselementes gegenüber dem Rahmen (10) verschwenkbar ist.

## Beschreibung

Die Erfindung betrifft eine Anhängevorrichtung gemäß des Oberbegriffes des Patentanspruches 1.

Eine derartige Anhängevorrichtung ist beispielsweise durch den Prospekt Amazone UG Nova mit Druckvermerk MI 1080 / S239 (D) 03.06 bekannt. In diesem Prospekt ist eine hydraulische Universaldeichsel abgebildet. Wobei die Quertraverse um eine in Längsrichtung der Deichsel verlaufende Schwenkachse frei schwenkbar mittels einer Gelenkanordnung an der Deichsel angeordnet ist.

Insbesondere bei Kurvenfahrt, wenn die Deichsel mittels des Gelenkes, mit welchem sie am Rahmen der Maschine angelenkt ist, nicht fluchtend in der Längsrichtung des landwirtschaftlichen Gerätes sich befindet, ist eine erhöhte Kippgefahr gegeben. Auch bei Fahrten quer zum Hang besteht insbesondere bei gefülltem Vorratsbehälter des landwirtschaftlichen Gerätes eine erhöhte Kippgefahr.

Der Erfindung liegt die Aufgabe zugrunde, diese vorgeschilderte Kippgefahr mittels einfacher Mittel zu verringern.

Diese Aufgabe wird erfindungsgemäß dadurch gelöst, dass zwischen der Quertraverse und dem Rahmen ein Torsionselement angeordnet ist, dass das Torsionselement jeweils mit der Quertraverse und dem Rahmen in drehfester Weise verbunden ist und zwar derart, dass die Quertraverse gegen die Federkraft des Torsionselementes gegenüber dem Rahmen verschwenkbar ist. Infolge dieser Maßnahme wird durch das zwischen der Quertraverse und dem Rahmen angeordnete Torsionselement den Kippmoment, wenn das Gerät gegenüber dem Zugfahrzeuge um seine Längsachse sich verdrehen will und zum Kippen neigt, entgegengewirkt und über die große Masse des Nutzfahrzeuges wird dem Umkippen des Anhängegerätes somit wirkungsvoll entgegengewirkt.

Um ein Verschwenken der Deichsel um die aufrechte Gelenkachse des Gelenkes, mit dem die Deichsel am Rahmen angeordnet ist, trotz der Anordnung des Torsionselementes am Rahmen zu ermöglichen, ist vorgesehen, dass das Torsionselement an dem Rahmen mittels eines Kreuzgelenkes befestigt ist.

Ein besonders gutes Verschwenken der Deichsel um die aufrechte Gelenkachse des Deichselgelenkes wird dadurch erreicht, dass der Mittelpunkt des Kreuzgelenkes zumindest annähernd mit der Gelenkachse des Deichselgelenkes zusammenfällt.

Um der Kippgefahr insbesondere bei Kurvenfahrten verstärkt entgegen zu wirken, d.h. wenn die Deichsel gegenüber der Längsrichtung des Rahmens abgewinkelt ist, mit einem erhöhten oder sich dem Radius der Kurvenfahrt anpassenden Torsionsmoment entgegenwirken zu können, ist vorgesehen, dass die erste Achse des Kreuzgelenkes bei horizontaler Ausrichtung des Rahmens des Gerätes horizontal und quer zur Fahrtrichtung verläuft, dass die zweite Achse des Kreuzgelenkes einen Winkel von etwa 20° - 40°, vorzugsweise von zumindest annähernd 30° zur Gelenkachse einschließt und parallel zur Fahrtrichtung verlaufender Deichselgelenkachsenebene verläuft. Infolge dieser Maßnahmen wird bei einem Verschwenken der Deichsel gegenüber der Längsachse des Gerätes um die aufrechte Gelenkachse des Deichselgelenkes das Torsionselement entsprechend tordiert.

Um dieses dem Moment entgegenwirkende Torsionsdrehmoment vorteilhaft aufbringen zu können, ist vorgesehen, dass die zweite Achse des Kreuzgelenkes schräg von hinten unten nach vorn oben verläuft.

Um das Torsionselement auch bei einer Deichselanordnung verwirklichen zu können, bei dem die Quertraverse mittels eines Gelenkes, dessen Gelenkachse aufrecht verläuft an dem vorderen Ende der Zugdeichsel anordnen zu können, um somit über eine Arretierungseinrichtung wahlweise das Deichselgelenk oder das Quertraversengelenk für die jeweils gewünschte Betriebsweise blockieren zu können, und dennoch das Torsionselement einsetzen zu können, ist vorgesehen, dass die Quertraverse über ein Schwenkelement mittels eines Gelenkes, dessen Gelenkachse aufrecht verläuft, an der die Deichsel angeordnet ist, dass zwischen dem Torsionselement und der Quertraverse im Bereich des Schwenkgelenkes ein weiteres Kreuzgelenk angeordnet ist, dass der Mittelpunkt des weiteren Kreuzgelenkes zumindest annähernd mit der aufrechten Gelenkachse des Schwenkgelenkes zusammenfällt.

Ein einfach ausgestaltetes Torsionselement mit einstellbaren Drehmomenten dadurch geschaffen, dass die Quertraverse gegen die Federkraft des Torsionselementes gegenüber dem Rahmen verschwenkbar ist, dass das Torsionselement mittels Anschlusselementen mit der Quertraverse und dem Rahmen verbindbar ist, dass das Torsionselement mehrere um die Torsionsachse angeordnet und in Richtung der Torsionsachse sich erstreckende Längsstäbe aufweist, dass die Längsstäbe mit ihren Endbereichen formschlüssig in Anschlusselementen angeordneten Aussparungen einsteckbar angeordnet sind, jedoch in Richtung der Torsionsachse und/oder der Längsachse der Längsstäbe, vorzugsweise frei verschiebbar angeordnet sind.

Infolge dieser Maßnahmen wird das Torsionselement durch die einzelnen Längsstäbe gebildet, die in die Aussparungen der Anschlusselemente einsteckbar sind. Durch einen einfachen Austausch oder Veränderung der Anzahl der in die Aussparungen eingesteckten Längsstäbe lässt sich über die Anzahl und Dimensionierung der Längsstäbe das Drehmoment in einfacher Weise an den jeweils anstehenden Einsatzfall in einfacher Weise anpassen. Hierbei sind die Längsstäbe in formschlüssiger Weise in den Auspaarungen in formschlüssiger Weise mit einer annähernd spielfreien Schiebepassung verschiebbar, jedoch drehfest angeordnet. Diese verschiebbare Anordnung ist so ausgestaltet, dass ein Verkanten der Längsstäbe in den Auspaarungen ausgeschlossen ist, damit keine Zug- oder Druckspannung in den Längsstäben und in dem mit der Torsionsachse fluchtenden mittleren Stahl auftritt. Hierdurch wird gewährleistet, dass das Torsionselement nur auf reine Torsion und nicht auf Druck- und Längsspannung beansprucht wird.

Um eine einfache Anordnung der Längsstäbe in den Auspaarungen und den Anschlusselementen zu ermöglichen ist vorgesehen, dass ein mit der Torsionsachse fluchtender Stab vorgesehen ist, dass die Längsstäbe mit ihrer der Torsionsachse zugewandten Seite zumindest annähernd an diesem Stab anliegend angeordnet sind. Somit können die Aussparungen in Richtung der Torsionsachse offen ausgebildet sein. Der mit der Torsionsachse fluchtende Stab dient lediglich zur Positionierung der Längsstäbe in den Aussparungen.

Eine vorteilhafte Anordnung der Aussparung und damit der Längsstäbe des Torsionselementes wird dadurch erreicht, dass die Aussparungen in den Anschlusselementen von der Torsionsachse ausgehend in sich sternförmiger Weise und/oder radialer Richtung erstreckend angeordnet sind.

Um das Torsionselement gleichmäßig zu belasten, ist vorgesehen, dass die Aussparungen gleichmäßig verteilt um die Torsionsachse angeordnet sind.

Eine besonders vorteilhafte Ausgestaltung der Längsstäbe ergibt sich dadurch, dass die als Flachstäbe ausgebildeten Längsstäbe einen rechteckigen Querschnitt aufweisen.

Eine wirksame Torsion des Torsionselementes lässt sich in einfacher Weise dadurch erreichen, dass als Flachstäbe ausgebildete Längsstäbe mit ihrer schmalen Seite in radialer Richtung ausgerichtet angeordnet sind.

Die Längsstäbe bestehen in vorteilhafter Weise aus Federstahl.

Des Weiteren ist vorgesehen, dass die Längsstäbe als Flachstäbe oder als Profilstäbe ausgebildet sein können.

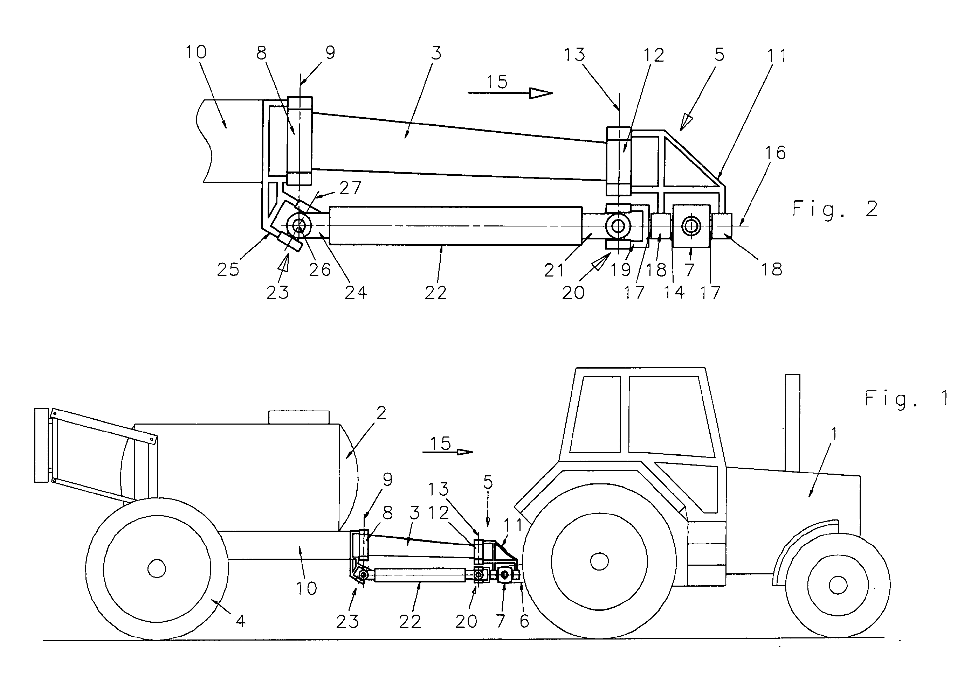

Weitere Einzelheiten der Erfindung sind der Beispielsbeschreibung und den Zeichnungen zu entnehmen. Hierbei zeigen
- Fig. 1: den Zugverband, bestehend aus Ackerschlepper und Anhängegerät mit der erfindungsgemäßen Anhängevorrichtung in Seitenansicht und in Prinzipdarstellung,
- Fig. 2: die Anhängevorrichtung gemäß Fig. 1 in gleicher Darstellung, jedoch in einem größeren Maßstab,
- Fig. 3: das Torsionselement in vergrößertem Maßstab in perspektivischer Darstellung,
- Fig. 4: die eine Seite des Anschlusselementes, in welche die Längsstäbe des Torsionselementes einsteckbar sind und mit dem zugeordneten Kreuzgelenk,
- Fig. 4a: das Anschlusselement des Torsionselementes mit dem mit der Torsionsachse fluchtenden Stab,
- Fig. 4b: das Torsionselement mit einem Anschlusselement in perspektivischer Darstellung in der Ansicht IV -IV und
- Fig. 5: ein anders ausgestaltetes Anschlusselement des Torsionselementes in der Ansicht gemäß Fig. 4.

Der landwirtschaftliche Zugverband besteht aus dem Ackerschlepper 1 und dem angehängten gezogenen Gerät 2. Dieses gezogene Gerät 2 ist als eine Zugdeichsel 3 aufweisendes einachsiges Gerät mit den Laufrädern 4 ausgebildet. Die Zugdeichsel 3 dient als Anhängevorrichtung 5 zur Ankupplung an die Unterlenker 6 des Dreipunktkrafthebers des als Ackerschlepper 1 ausgebildeten Zugfahrzeuges. Die Anhängevorrichtung 5 weist eine Quertraverse 7 mit der Deichsel 3 auf. Die Quertraverse 7 ist zur Ankupplung an die Unterlenker 6 des Dreipunktkrafthebers vorgesehen. Die Deichsel 3 ist auf der dem Zugfahrzeug 1 abgewandeten Seite mittels eines Gelenkes 8, welches eine aufrechte Achse 9 aufweist, verschwenkbar um diese Achse 9 am Rahmen 10 des Gerätes 2 angeordnet. Dieses Gelenk wird als Deichselgelenk bezeichnet.

Die Quertraverse 7 ist über das Kreuzgelenkelement 11 an der Deichsel 3 mittels des Quertraversengelenkes 12, welches die aufrechte Achse 13 aufweist, um diese aufrechte Achse 13verschwenkbar angeordnet. Zusätzlich ist die Quertraverse 7 an dem Kreuzgelenkelement 11 mittels des Gelenkes 14 um die in Fahrtrichtung 15 verlaufende Achse 16 verschwenkbar angeordnet.

Somit ist die Deichsel 3 über das Deichselgelenk 8 mit dem Rahmen 10 und über das Quertraversengelenk 12 mit der Quertraverse 7 verbunden.

Der Anhängevorrichtung 5 ist eine nicht dargestellte Arretierungsvorrichtung zugeordnet, mittels welcher wahlweise das Quertraversengelenk 12 der Deichsel 3 oder das Deichselgelenk 8 der Deichsel 3 zu blockieren bzw. festzustellen ist. Diese Arretierungsvorrichtung kann als Verschiebeelement ausgebildet sein, welche mit dem Rahmen 10 und der Deichsel 3 einerseits oder dem Kreuzgelenkelement 11 und der Quertraverse 7 andererseits wahlweise zusammenwirkt, um das jeweilige Gelenk 8, 12 entsprechend blockieren zu können, wie dies beispielsweise durch die De 41 38 485 C2 bekannt ist.

Die Quertraverse 7 ist drehfest auf der Welle 17 angeordnet. Diese Welle 17 des Gelenkes 14 ist in dem Kreuzgelenkelement 11 um ihre Längsachse 16 mittels der Lagerelemente 18 verdrehbar gelagert. Auf dem der Quertraverse 7 abgewandten Ende der Welle 17 ist die eine Gabel 19 des Kreuzgelenkes 20 drehfest angeordnet. Die andere Gabel 21 des Kreuzgelenkes 20 ist drehfest mit dem Torsionselement 22 verbunden. Der Mittelpunkt des Kreuzgelenkes 20 fluchtet mit der aufrechten Achse 13 des Quertraversengelenkes 12.

An dem Rahmen des Anhängegerätes 2 ist in Flucht des Deichselgelenkes 8 ein weiteres Kreuzgelenk 23 angeordnet. Der Mittelpunkt dieses Kreuzgelenkes 23 fällt zumindest annähernd mit der Gelenkachse 9 des Deichselgelenkes 8 zusammen. Die eine Gabel 24 dieses Kreuzgelenkes 23 ist drehfest mit dem Torsionselement 22 verbunden, während die andere Gabel 25 des Kreuzgelenkes 23 drehfest mit dem Rahmen 10 des Gerätes 2 verbunden ist.

Die erste Achse 26 des dem Deichselgelenk 8 zugeordneten Kreuzgelenkes 23, welches mit der Torsionswelle 22 verbunden ist, ist bei horizontaler Ausrichtung des Rahmens 10 des Gerätes 2 horizontal und quer zur Fahrtrichtung verlaufend ausgerichtet, während die zweite Achse 27 dieses Kreuzgelenkes 23 einen Winkel von etwa 20° bis 40°, vorzugsweise zumindest annähernd 30° zur Gelenkachse 9 des Deichselgelenkes 8 einschließt und parallel zur in Fahrtrichtung 15 verlaufenden Ebne der Deichselgelenkachse 9 verläuft. Hierbei ist diese zweite Achse 27 des Kreuzgelenkes 23 schräg von hinten unten nach vorn oben verlaufend ausgerichtet.

Wie bereits vor erwähnt, wird mittels einer nicht dargestellten Arretierungsvorrichtung je nach Einsatzfall des Zugverbandes entweder das Deichselgelenk 8 oder das Quertraversengelenk 12 blockiert.

Bei Straßenfahrt des Zugverbandes wird über die Arretierungsvorrichtung das Deichselgelenk 8 blockiert, so dass in diesem Falle die Deichsel 3 unverschwenkbar gegenüber dem Rahmen 10 angeordnet ist.

Zur grundsätzlichen Funktion des erfindungsgemäßen Systems sei erwähnt, dass die Quertraverse 7 über die Dreipunktkraftheber unverschwenkbar um eine in Fahrtrichtung verlaufende Achse gegenüber dem Zugfahrzeug 1 angeordnet sind. Bei den in der Landwirtschaft zum Einsatz kommenden Ackerschleppern ist es der Normalfall das die beiden Unterlenker 6 des Dreipunktkrafthebers in Höhenrichtung unbeweglich zueinander angeordnet sind. Es ist nicht unbedingt Grundvoraussetzung, dass die Unterlenker miteinander starr verbunden sein müssen, damit dieses System funktioniert. Auch tritt der gewünschte Effekt schon ein da, wenn der eine Unterlenker über die Quertraverse angehoben wird, und sich der Abstützpunkt zu der einen Seite der Quertraverse hin verlagert. Es wird hierdurch eine günstigere Abstützsituation geschaffen werden. Dies wird dadurch erreicht, dass die Quertraverse über das Torsionselement nur gegen Aufbringen einer Torsionskraft verdreht werden kann.

Um während des Einsatzes auf dem Acker, einen spurgetreuen Nachlauf der Laufräder 4 des Nachlaufgerätes 2 in der von den Rädern des Zugfahrzeuges erzeugten Spur zu gewährleisten wird über die Arretierungsvorrichtung das Deichselgelenk 8 blockiert, während das das Quertraversengelenk 12 freigegeben ist. Um bei Kurvenfahrt, wenn das Deichselgelenk 8 sich außerhalb der geraden Verbindungslinie zwischen Anhängegerät 2 und Zugfahrzeug befindet, einer erhöhte Kippgefahr entgegenwirken zu können, ist der Rahmen 10 über das Torsionselement 22 mit der Quertraverse 7 verbunden. Wenn dann das Anhängegerät 2 umkippen will oder sich verdrehen will, wird aufgrund der Verbindung des Rahmens 10 mit der verschwenkbar angeordneten Quertraverse 7 über das Torsionselement 22 diesem Kippmoment entgegengewirkt, so dass die aufgebrachte Torsionskraft durch das Torsionselement 22 dem Umkippen entgegenwirkt. Je stärker die Deichsel 3 aus der Längsrichtung des Rahmens 10 des Anhängegerätes 2 bei Kurvenfahrt abgewinkelt wird, um so stärker wird das von dem Torsionselement 22 aufgebrachte Torsionsmoment durch die schräge Anordnung der einen Achse 27 des dem Deichselgelenk 8 zugeordneten Kreuzgelenkes 23.

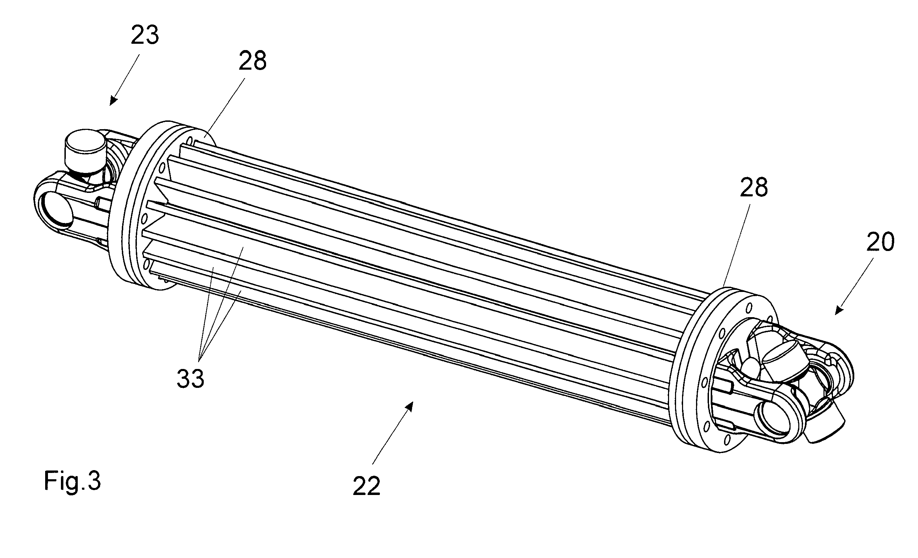

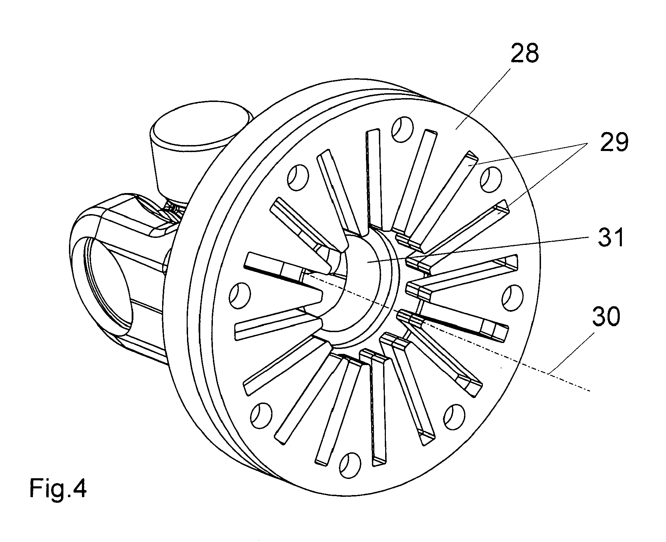

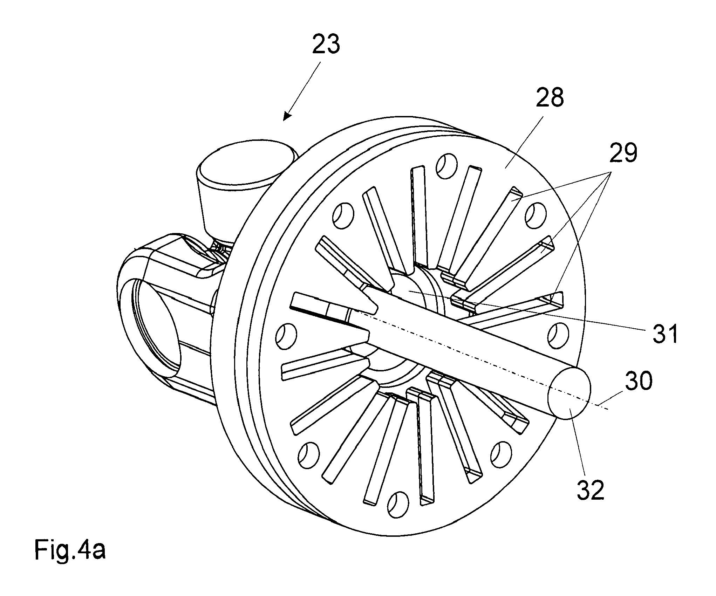

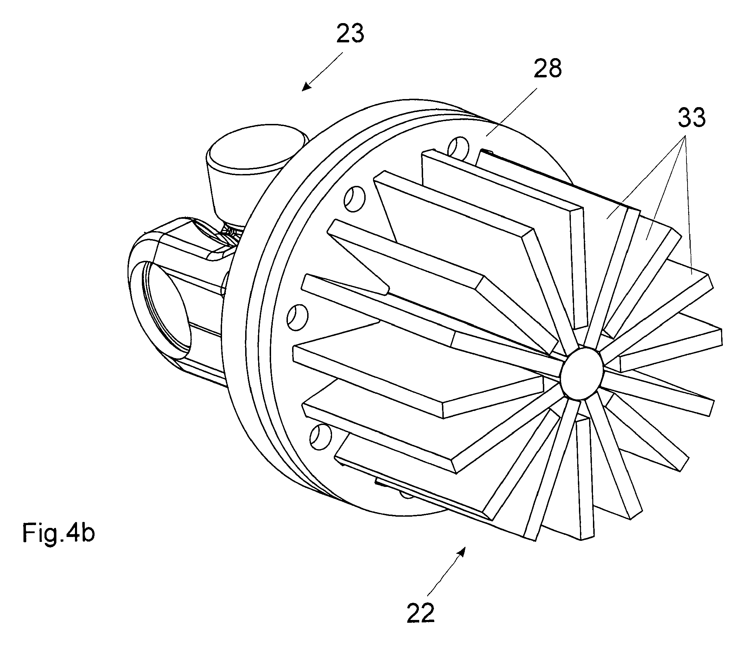

Das in den Fig. 3 bis 5 dargestellte Torsionselement 22 ist über die Anschlusselemente 28 und den daran angeordneten Kreuzgelenken 20 und 23 einerseits mit dem Rahmen 10 und andererseits mit der Quertraverse 7 verbunden. Die Anschlusselemente 28 auf beiden Enden des Torsionselementes 22 weisen Aussparungen 29 auf. Diese Aussparungen 29 in den Anschlusselementen 28 sind von der Torsionsachse 30 ausgehend in sternförmiger Weise oder radialer Richtung sich erstreckend angeordnet, wie insbesondere Fig. 4 zeigt. Die Aussparungen 29 sind gleichmäßig verteilt um die Torsionsachse 30 angeordnet. Das Anschlusselement 28 weist zentral eine Bohrung 31 auf, in welche ein sich in Längsrichtung der Torsionsachse 30 und mit der Torsionsachse 30 fluchtender Stab 32 angeordnet ist, wie Fig. 4a zeigt. Die Aussparungen 29 sind länglich ausgebildet. Die Aussparungen 29 weisen einen richtigen Querschnitt auf und sind in Richtung der Torsionsachse 30 offen ausgestaltet.

In die Aussparungen 29 der Anschlusselemente 28 sind die Längsstäbe 33 mit ihren Endbereichen formschlüssig angeordnet. Die Längsstäbe 33 sind mit ihren Endbereichen formschlüssig und quasi spielfrei in den in den Anschlusselementen 28 angeordneten Aussparungen 29 einsteckbar angeordnet, jedoch in Richtung der Torsionsachse 30 des Torsionselementes 22 frei verschiebbar angeordnet. Aufgrund der spielfreien Anordnung der Endbereiche der Längsstäbe 33 in den Aussparungen 29 sind die Längsstäbe 33 drehfest in den Anschlusselementen 28 angeordnet und es wird somit ein Verkanten der Längsstäbe 33 in den Aussparungen 29 vermieden.

Die Längsstäbe 33 liegen mit ihrer der Torsionsachse 30 zugewandten Seite zumindest annähernd an dem Stab 32, dessen Mittelachse mit der Torsionsachse 33 fluchtet, an.

Die als Flachstäbe ausgebildeten Längsstäbe 33 weisen einen rechteckigen Querschnitt auf. Die als Flachstäbe 33 ausgebildeten Längsstäbe sind mit ihrer schmalen Seite in radialer Richtung ausgerichtet angeordnet, wie die Fig. 3 bis 5 zeigen. Die Längsstäbe 33 bestehen aus Federstahl und sind als Flachstäbe ausgebildet. Auch ist es möglich, die Längsstäbe als Profilstäbe, beispielsweise einem U-förmigen oder winkelförmigen Querschnitt auszubilden.

Um ein maximales Torsionselement zu erreichen, werden in sämtlichen Aussparungen 29 der Anschlusselemente 28 die Längsstäbe 33 angeordnet.

Falls jedoch ein geringeres Torsionsmoment erwünscht ist, ist es möglich, eine Anzahl von Flachstäben 33 aus den Aussparungen 29 herauszunehmen. Hierbei ist jedoch darauf zu achten, dass die verbleibenden Längsstäbe gleichmäßig um die Torsionsachse 30 in den Aussparungen 29 der Anschlusselemente 28 verteilt angeordnet sind.

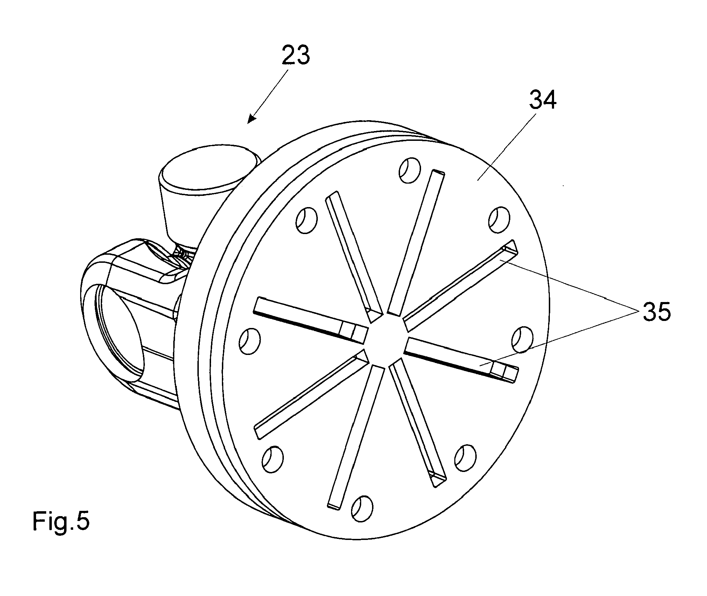

Die Fig. 5 zeigt ein weiteres Anschlusselement eines Torsionselementes, welches sich von Fig. 4 bis 4b dadurch unterscheidet, dass eine geringere Anzahl Aussparungen 35 im Anschlusselement 34 angeordnet sind und die Aussparungen 35 in der Torsionsachse zugewandten Seite nicht offen sind. Hierdurch ist es nicht erforderlich, im Bereich der Torsionsachse einen Längsstab einzulegen, sondern die Torsionsstäbe werden von den Aussparungen 35 in dem Anschlusselement 34 in jeder Richtung entsprechend gehalten.

## Patentansprüche

1. Anhängevorrichtung für ein einen Rahmen aufweisendes gezogenes landwirtschaftliches Gerät zur Ankupplung an die Unterlenker des Dreipunktkrafthebers eines Zugfahrzeuges über eine Quertraverse mit einer Deichsel, die mittels jeweils eines eine aufrechte Gelenkachse aufweisenden als Deichselgelenk ausgebildeten Gelenkes an dem Rahmen des Gerätes verbunden ist, wobei die Quertraverse an der der Deichsel mittels eines eine in Fahrtrichtung verlaufende Gelenkachse aufweisenden Gelenkes, das ein Verschwenken der Quertraverse gegenüber der Deichsel um diese Gelenkachse ermöglicht, angeordnet ist, **dadurch gekennzeichnet, dass** zwischen der Quertraverse (7) und dem Rahmen (10) ein Torsionselement (22) angeordnet ist, dass das Torsionselement (22) jeweils mit der Quertraverse (7) und dem Rahmen (10) in drehfester Weise verbunden ist und zwar derart, dass die Quertraverse (7) gegen die Federkraft des Torsionselementes (22) gegenüber dem Rahmen (10) verschwenkbar ist.

2. Anhängevorrichtung nach Anspruch 1, **dadurch gekennzeichnet, dass** das Torsionselement (22) an dem Rahmen (10) mittels eines Kreuzgelenkes (23) befestigt ist.

3. Anhängevorrichtung nach Anspruch 2, **dadurch gekennzeichnet, dass** der Mittelpunkt des Kreuzgelenkes (23) zumindest annähernd mit der Gelenkachse (9) des Deichselgelenkes (8) zusammenfällt.

4. Anhängevorrichtung nach Anspruch 2, **dadurch gekennzeichnet, dass** die erste Achse (26) des Kreuzgelenkes (23) bei horizontaler Ausrichtung des Rahmens (10) des Gerätes (2) horizontal und quer zur Fahrtrichtung (15) verläuft, dass die zweite Achse (27) des Kreuzgelenkes (23) einen Winkel von etwa 20° - 40°, vorzugsweise von zumindest annähernd 30° zur Gelenkachse (9) einschließt und parallel zur Fahrtrichtung (15) verlaufender Deichselgelenkachsenebene verläuft.

5. Anhängevorrichtung nach Anspruch 4, **dadurch gekennzeichnet, dass** die zweite Achse (27) des Kreuzgelenkes (23) schräg von hinten unten nach vorn oben verläuft.

6. Anhängevorrichtung nach einem oder mehreren der Ansprüche, **dadurch gekennzeichnet, dass** die Quertraverse (7) über ein Schwenkelement (11,14) mittels eines Gelenkes (12), dessen Gelenkachse (13) aufrecht verläuft, an der die Deichsel (3) angeordnet ist, dass zwischen dem Torsionselement (22) und der Quertraverse (7) im Bereich des Schwenkgelenkes (12) ein Kreuzgelenk (20) angeordnet ist, dass der Mittelpunkt des Kreuzgelenkes (20) zumindest annähernd mit der aufrechten Gelenkachse (13) des Schwenkgelenkes (12) zusammenfällt.

7. Anhängevorrichtung nach Anspruch 1, **dadurch gekennzeichnet, dass** das Torsionselement mittels Anschlusselementen mit der Quertraverse und dem Rahmen verbindbar ist, dass das Torsionselement mehrere um die Torsionsachse angeordnete und in Richtung der Torsionsachse sich erstreckende Längsstäbe aufweist, dass die Längsstäbe mit ihren Endbereichen formschlüssig in Anschlusselementen angeordneten Aussparungen einsteckbar angeordnet sind, jedoch in Richtung der Torsionsachse und/oder der Längsachse der Längsstäbe, vorzugsweise frei verschiebbar angeordnet sind.

8. Anhängevorrichtung nach Anspruch 7, **dadurch gekennzeichnet, dass** ein mit der Torsionsachse fluchtender Stab vorgesehen ist, dass die Längsstäbe mit ihrer der Torsionsachse zugewandten Seite zumindest annähernd an diesem Stab anliegend angeordnet sind.

9. Anhängevorrichtung nach einem oder mehreren der vorstehenden Ansprüche, **dadurch gekennzeichnet, dass** die Aussparungen in den Anschlusselementen von der Torsionsachse ausgehend in sich sternförmiger Weise und/oder radialer Richtung erstreckend angeordnet sind.

10. Anhängevorrichtung nach einem oder mehreren der vorstehenden Ansprüche, **dadurch gekennzeichnet, dass** die Aussparungen gleichmäßig verteilt um die Torsionsachse angeordnet sind.

11. Anhängevorrichtung nach einem oder mehreren der vorstehenden Ansprüche, **dadurch gekennzeichnet, dass** die als Flachstäbe ausgebildeten Längsstäbe einen rechteckigen Querschnitt aufweisen.

12. Anhängevorrichtung nach einem oder mehreren der vorstehenden Ansprüche, **dadurch gekennzeichnet, dass** als Flachstäbe ausgebildete Längsstäbe mit ihrer schmalen Seite in radialer Richtung ausgerichtet angeordnet sind.

13. Anhängevorrichtung nach Anspruch 7, **dadurch gekennzeichnet, dass** die Längsstäbe aus Federstahl bestehen.

14. Anhängevorrichtung nach Anspruch 7, **dadurch gekennzeichnet, dass** die Längsstäbe als Flachstäbe ausgebildet sind.

15. Anhängevorrichtung nach Anspruch 7, **dadurch gekennzeichnet, dass** die Längsstäbe als Profilstäbe ausgebildet sind.
